# EUROPÄISCHE PATENTANMELDUNG

(11) **EP 0 928 628 A2**
(43) Veröffentlichungstag der Anmeldung: **14.07.1999**
(21) Anmeldenummer: 98120479.5
(22) Anmeldetag: 29.10.1998
(51) Int. Cl.: B01D 1/16, B01D 1/14

(54) **Verfahren zum Verdampfen von Flüssigkeit in einem Gasstrom**

(30) Priorität: 12.12.1997 DE 19755275
(71) Anmelder: BASF AKTIENGESELLSCHAFT, 67056 Ludwigshafen (DE)
(72) Erfinder: Knab, Jean Werner, 67117 Limburgerhof (DE); Reuter, Peter Dr., 68199 Mannheim (DE); Weickenmeier, Heinz, 67354 Römerberg (DE); Lorz, Peter Michael, 67157 Wachenheim (DE)

(57) **Zusammenfassung**

Verfahren zur Rückführung von Flüssigkeit in einen Gasstrom, wobei die Flüssigkeit in einem durchströmten Rohr durch die Gasströmung an der Wand entlang geführt wird, wobei man
a. die Flüssigkeit durch einen im Rohr angebrachten Ring in Richtung auf die Rohrmittelachse führt und
b. die Flüssigkeit an der Innenseite des Rings von der Gasströmung abgeschält und mitgerissen wird.

## Beschreibung

Die vorliegende Erfindung betrifft eine verbessertes Verfahren zur Rückführung von Flüssigkeit in einen Gasstrom, wobei die Flüssigkeit in einem durchströmten Rohr durch die Gasströmung an der Wand entlang geführt wird.

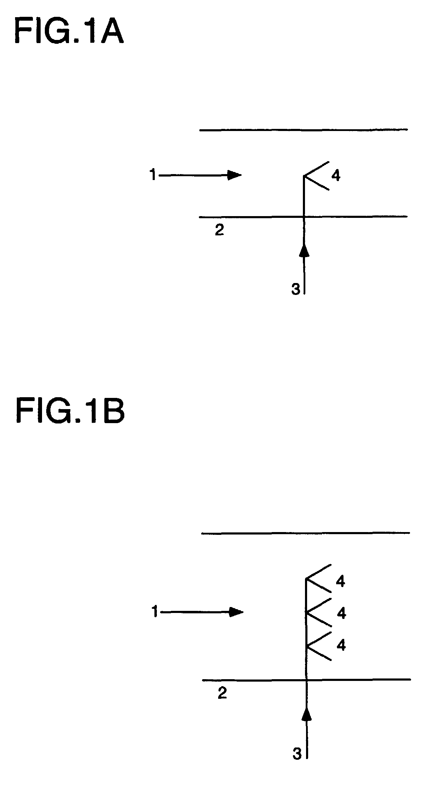

Zur Verdampfung von Flüssigkeiten in einem Gasstrom sind bereits unterschiedliche Verfahren bekannt. Eine einfache und effiziente Methode eine Flüssigkeit in einem Gasstrom zu verdampfen besteht darin, diese in das gasführende Rohr einzudüsen. Hierzu wird üblicherweise eine zentrisch angeordnete Düse verwendet, bei größeren Rohrdurchmessern setzt man auch mehrere über den Rohrquerschnitt verteilte Düsen ein. Der prinzipielle Aufbau solcher Vorrichtungen ist in den Figuren 1a und 1b dargestellt. Über Leitung (1) wird die Gasströmung einem Rohr (2) zugeführt. Über Leitung (3) wird die zu verdampfende Flüssigkeit über eine oder mehrere Düsen (4) in der Gasströmung verteilt. Die notwendige Energie zur Verdampfung wird entweder durch den Gasstrom selbst eingebracht, d.h. das Gas kühlt sich entsprechend der verdampften Flüssigkeitsmenge ab oder durch Eindüsen überhitzter Flüssigkeit gewährleistet. Es können auch beide Effekte gemeinsam ausgenutzt werden. Durch die beim Verdüsen üblicherweise auftretende kegelförmige Ausbreitung der Tropfen gelangt in der Regel ein beträchtlicher Teil der Flüssigkeit an die Rohrwand. Da die üblichen Gasgeschwindigkeiten innerhalb des Rohres bei mehr als 10 m/s liegen, wird der an der Wand gebildete Flüssigkeitsfilm in Strömungsrichtung mitgerissen. Dieser Transport des Flüssigkeitsfilms kann sogar entgegen der Schwerkraft erfolgen wie in "K. Feind, Verfahrenstechnik 5 (1971), S. 417 beschrieben wird. Es wird in diesem Artikel weiterhin die Empfehlung gegeben, zur Vermeidung des Transports eines solchen Flüssigkeitsfilms die Gasgeschwindigkeit entsprechend zu verringern.

Ist die Flüssigkeit erst einmal als Flüssigkeitsfilm an der Wand, so verdampft dieser Anteil viel langsamer als in Form fein verteilter Tröpfchen in der Gasströmung. Ursache hierfür ist die deutlich kleinere Oberfläche.

Es stellte sich somit die Aufgabe, ein verbessertes Verfahren zur Verdampfung von Flüssigkeiten in einer Gasströmung zu finden, welches eine verfahrenstechnisch einfache und wirtschaftliche, vollständige Verdampfung der Flüssigkeit ermöglicht. Weiterhin soll es das Verfahren ermöglichen, eine unerwünschte Reduzierung des Gasstromes aufgrund des Transports des Flüssigkeitsfilms an der Rohrwand zu vermeiden.

Demgemäß wurde ein Verfahren zur Rückführung von Flüssigkeit in einen Gasstrom gefunden, wobei die Flüssigkeit in einem durchströmten Rohr durch die Gasströmung an der Wand entlang geführt wird, welches dadurch gekennzeichnet ist, daß man
a. die Flüssigkeit durch einen im Rohr angebrachten Ring in Richtung auf die Rohrmittelachse führt und
b. die Flüssigkeit an der Innenseite des Rings von der Gasströmung abgeschält und mitgerissen wird.

Die erfindungsgemäße Rückführung des Flüssigkeitsfilms in den Gasstrom wird in einfacher und effizienter Weise dadurch bewerkstelligt, daß man die Flüssigkeit von der Wand durch einen dicht mit der Wand verbundenen Ring "abschält".

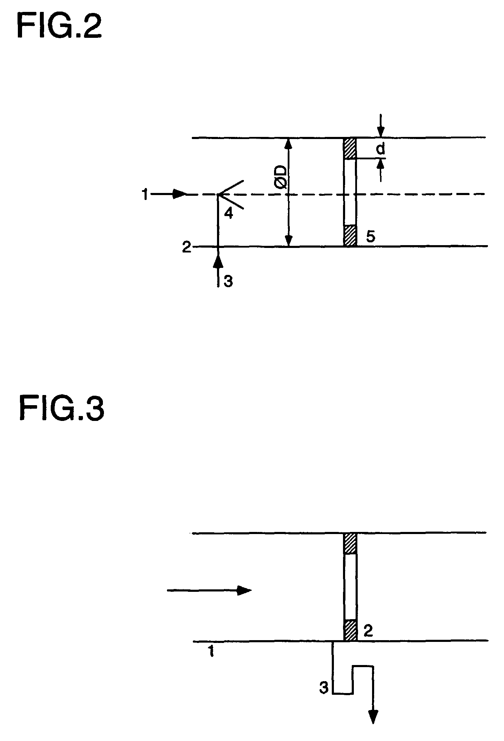

In Fig. 2 ist die Anordnung für das erfindungsgemäße Verfahren schematisch dargestellt. Über Leitung (1) wird dem Rohr (2) mit dem Innendurchmesser D der Gasstrom zugeführt. Durch Leitung (3) wird die zu verdampfende Flüssigkeit mittels Düse (4) im Gasstrom fein verteilt. Innerhalb des Rohres (2) ist der Ring (5) mit der Ringdicke d angebracht und fest mit der Rohrwand verbunden. Diese feste Verbindung kann beispielsweise durch einschweißen über den ganzen Umfang oder montieren über Flanschverbindungen erfolgen. Der an der Rohrwand in Strömungsrichtung entlanglaufende Flüssigkeitsfilm staut sich nun an dem Ring auf und wird in Richtung des Rohrinneren geführt. Wenn die Flüssigkeit nicht bereits dort verdampft ist, wird sie an der Ringinnenseite durch die Gasströmung wieder abgelöst, so in den Gasstrom wieder als Tröpfchen dispergiert und anschließend verdampft.

Für das erfindungsgemäße Verfahren vorteilhafte Ringdicken d richten sich nach den jeweiligen Verfahrensbedingungen. Üblicherweise liegen sie bei etwa 0,5 bis 5 cm, bevorzugt 2 bis 5 cm. Der Querschnitt der gasführenden Rohrleitung wird durch den Ring um etwa 0,5 bis 30 %, bevorzugt 5 bis 15 % verringert.

Die Gasgeschwindigkeit innerhalb des Rohres beträgt etwa 5 bis 40 m/s, bevorzugt 10 bis 25 m/s bezogen auf das nicht verengte gasführende Rohr. Der Rohrdurchmesser D des gasführenden Rohrs beträgt etwa 0,5 bis 5 m, bevorzugt 1 bis 3 m.

Die Effizienz des Verfahrens kann durch das Hintereinanderschalten mehrerer Ringe erhöht werden. Hierdurch wird sich ggf. nach dem Ring an der Rohrwand erneut abscheidende Flüssigkeit wieder in den Gasstrom zurückgeführt. Die Abstände dieser Ringe sollten etwa von 1/3 des Rohrdurchmessers bis dem zehnfachen des Rohrdurchmessers, bevorzugt ein Rohrdurchmesser bis drei Rohrdurchmesser betragen.

In einem besonders bevorzugten Verfahren schaltet man den Ring unmittelbar vor eine zum Zwecke der Mischung von Gasströmen geeigneten, handelsüblichen Vorrichtung. Hierzu eignen sich beispielsweise Leitbleche, Packungen, Füllkörper oder Gestricke. Besonders geeignete Mischvorrichtungen hängen von den jeweiligen Verfahrensparametern und Einsatzstoffen ab und können vom Fachmann durch Routineversuche ermittelt werden.

Falls die am Ring abgeschiedene Flüssigkeitsmenge sehr groß ist, kann diese Flüssigkeit vollständig oder teilweise aus der Rohrleitung ausgetragen werden. Dies ist in Figur 3 dargestellt. An dem Rohr (1) mit dem innenliegenden Ring (2) ist unmittelbar vor dem Ring ein Flüssigkeitsabzug (3) angebracht.

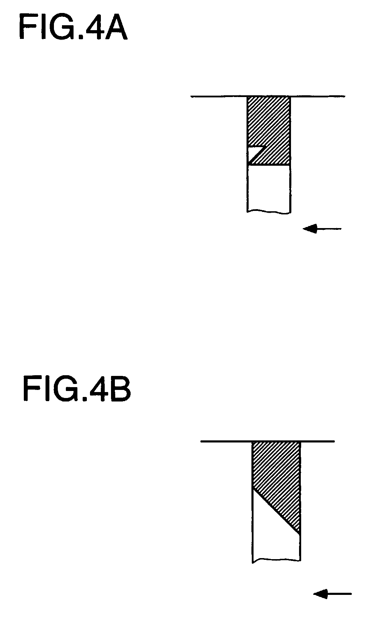

In einer besonders bevorzugten Ausführungsform weist der Ring eine oder mehrere scharfe Abreißkanten auf. Beispiele hierfür sind in den Figuren 4a und 4b zu sehen.

Das erfindungsgemäße Verfahren eignet sich hervorragend zum vollständigen und effektiven Verdampfen von Flüssigkeiten in Gasströmen. Beispielhaft werden hier Aromaten, Alkohole, Alkane, Alkene, organische Säuren, Aldehyde und Ketone genannt.

In einer bevorzugten Ausführungsform verwendet man das erfindungsgemäße Verfahren zum Verdampfen von o-Xylol in Luft. Hierzu werden beispielsweise 9 t/h auf 160°C vorgeheiztes o-Xylol in 90 000 m³/h Luft eingedüst. Die Luft ist vor der Eindüsung 220°C heiß und kühlt sich während der Verdampfung auf 185°C ab. Das gasführende Rohr hat einen inneren Durchmesser von 1,2 m.

10 m hinter der Eindüsung befindet sich ein dicht eingeschweißter Ring mit 5 cm Dicke. Das bis dorthin nicht verdampfte, als Wandfilm mitgeschleppte o-Xylol wird von der Wand abgeschält und an der Innenkante wieder als Tropfen abgelöst. In einer unmittelbar hinter dem Ring liegenden Vorrichtung zum Mischen des Gasstromes werden die abgelösten Tropfen abgeschieden und vollständig verdampft.

Das erfindungsgemäße Verfahren ermöglicht eine wirtschaftliche und verfahrenstechnisch einfache Rückführung von Flüssigkeit in einen Gasstrom. Es eignet sich besonders zur vollständigen Verdampfung von Flüssigkeiten in Gasströmen, wobei vorteilhafterweise hohe Gasströme aufrechterhalten werden können.

## Patentansprüche

1. Verfahren zur Rückführung von Flüssigkeit in einen Gasstrom, wobei die Flüssigkeit in einem durchströmten Rohr durch die Gasströmung an der Wand entlang geführt wird, dadurch gekennzeichnet, daß man
a. die Flüssigkeit durch einen im Rohr angebrachten Ring in Richtung auf die Rohrmittelachse führt und
b. die Flüssigkeit an der Innenseite des Rings von der Gasströmung abgeschält und mitgerissen wird.

2. Verfahren gemäß Anspruch 1, dadurch gekennzeichnet, daß man mehrere Ringe einsetzt.

3. Verfahren gemäß Ansprüchen 1 oder 2, dadurch gekennzeichnet, daß man den oder die Ringe unmittelbar vor einer zum Zwecke der Mischung von Gasströmen installierten, handelsüblichen Vorrichtung positioniert.

4. Verfahren zur Verdampfung von Flüssigkeiten in einem von Gas durchströmten Rohr, dadurch gekennzeichnet, daß man die Flüssigkeit an der Rohrwand gemäß Ansprüchen 1 bis 3 zurückführt.

5. Verwendung des Verfahrens gemäß Anspruch 4 zur Verdampfung von o-Xylol in Luft.
